# FASCICULE DE BREVET EUROPEEN

(11) **EP 3 918 576 B1**
(45) Date de publication et mention de la délivrance du brevet: **03.06.2026**
(21) Numéro de dépôt: 20703843.1
(22) Date de dépôt: 03.02.2020
(51) Int. Cl.: G06T 17/00, G06T 7/593

(54) **PROCÉDÉ DYNAMIQUE D'IMAGERIE TRIDIMENSIONNELLE**
VERFAHREN ZUR DYNAMISCHEN DREIDIMENSIONALEN BILDGEBUNG
DYNAMIC THREE-DIMENSIONAL IMAGING METHOD

(30) Priorité: 01.02.2019 FR 1901013
(43) Date de publication de la demande: 08.12.2021
(73) Titulaire: Querbes, Olivier, 31570 Vallesvilles (FR); Querbes-Duret, Véronique, 31570 Vallesvilles (FR)
(72) Inventeur: Querbes, Olivier, 31570 Vallesvilles (FR); Querbes-Duret, Véronique, 31570 Vallesvilles (FR)
(74) Mandataire: Bringer IP
(86) Numéro de dépôt international: PCT/IB2020/050838
(87) Numéro de publication internationale: WO 2020/157733

(56) Documents cités:
- US-A1- 2018 124 371
- US-B2- 9 646 410
- DU LIANG ET AL: "Weakly Supervised Deep Depth Prediction Leveraging Ground Control Points for Guidance", IEEE ACCESS, vol. 7, 16 January 2019 (2019-01-16), pages 5736 - 5748, XP011705479, [retrieved on 20190115], DOI: 10.1109/ACCESS.2018.2885773
- LAINA IRO ET AL: "Deeper Depth Prediction with Fully Convolutional Residual Networks", 2016 FOURTH INTERNATIONAL CONFERENCE ON 3D VISION (3DV), IEEE, 25 October 2016 (2016-10-25), pages 239 - 248, XP033027630, DOI: 10.1109/3DV.2016.32
- JI XIANG ET AL: "Dense Reconstruction from Monocular Slam with Fusion of Sparse Map-Points and Cnn-Inferred Depth", 2018 IEEE INTERNATIONAL CONFERENCE ON MULTIMEDIA AND EXPO (ICME), IEEE, 23 July 2018 (2018-07-23), pages 1 - 6, XP033417624, DOI: 10.1109/ICME.2018.8486548
- KELLER MAIK ET AL: "Real-Time 3D Reconstruction in Dynamic Scenes Using Point-Based Fusion", 2013 INTERNATIONAL CONFERENCE ON 3D VISION, IEEE, 29 June 2013 (2013-06-29), pages 1 - 8, XP032480439, DOI: 10.1109/3DV.2013.9
- BRIAN GUENTER ET AL: "Foveated 3D graphics", ACM TRANSACTIONS ON GRAPHICS, vol. 31, no. 6, 1 November 2012 (2012-11-01), pages 1, XP055199808, ISSN: 0730-0301, DOI: 10.1145/2366145.2366183

## Description

### Domaine technique

La présente invention se rapporte de manière générale à l'imagerie tridimensionnelle. Elle concerne plus particulièrement un procédé d'imagerie tridimensionnelle permettant la reconstruction dynamique d'un modèle numérique tridimensionnel à partir de plusieurs images numériques bidimensionnelles d'une scène tridimensionnelle donnée.

### Etat de la technique

Il existe à l'heure actuelle plusieurs méthodes qui permettent de générer un modèle numérique tridimensionnel pour représenter une scène tridimensionnelle quelconque. Parmi ces méthodes, la méthode dite de reconstruction stéréoscopique et la méthode dite de reconstruction par apprentissage sont particulièrement intéressantes pour des applications industrielles visant le grand public, car elles utilisent des flux d'images numériques bidimensionnelles qui proviennent de capteurs d'images passifs, pour reconstruire un modèle numérique tridimensionnel de la scène.

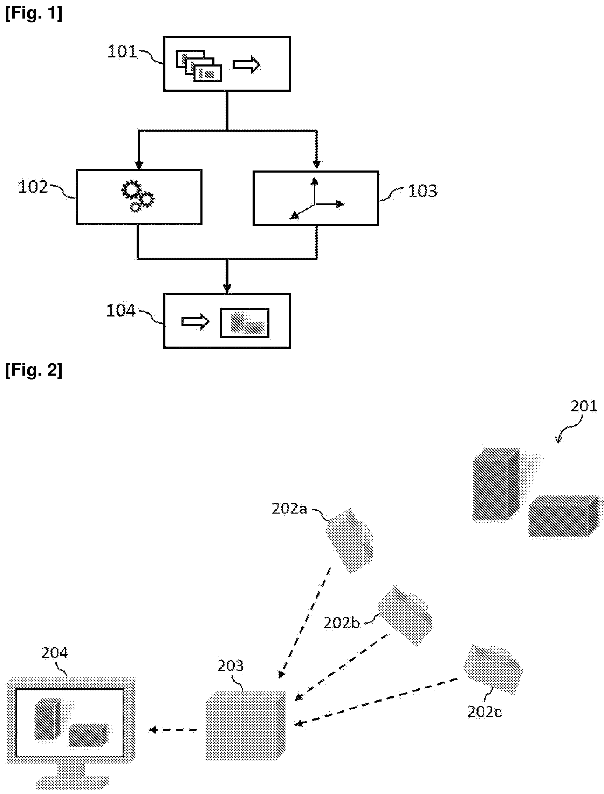

La **figure 1** montre un diagramme d'étapes illustrant de manière simplifiée les étapes, communes aux deux méthodes précitées, qui permettent la génération d'un modèle numérique tridimensionnel à partir d'images numériques bidimensionnelles. Ces méthodes sont réalisées selon une approche itérative dans laquelle chaque itération permet de générer un modèle numérique tridimensionnel qui enrichit et complète le modèle tridimensionnel établi, le cas échéant, lors d'une itération précédente.

Après une étape 101 de réception d'une ou de plusieurs images numériques bidimensionnelles représentant une scène tridimensionnelle donnée, les étapes 102 et 103 consistent respectivement, en une phase dite d'estimation de la position, et une phase dite d'estimation de l'information tridimensionnelle. D'une part, la phase d'estimation de la position consiste à déterminer, à un instant t donné, la position du (ou des) capteur(s) d'image(s) utilisé(s) pour acquérir les images numériques bidimensionnelles, par rapport au modèle numérique tridimensionnel déjà établi à cet instant t. De manière connue en soi, une telle détermination est réalisée en optimisant un critère prenant en compte à la fois les images bidimensionnelles et le modèle tridimensionnel (par exemple, par de la résection bidimensionnelle ou tridimensionnelle ou par l'optimisation d'un critère photométrique). D'autre part, la phase d'estimation de l'information tridimensionnelle consiste à calculer, par des calculs spécifiques à chacun de deux méthodes, un modèle numérique tridimensionnel à partir des images bidimensionnelles reçues au même instant t.

Finalement, lors de l'étape 104, les informations tridimensionnelles obtenues à l'issue du calcul de reconstruction tridimensionnelle sont ajoutées au modèle numérique tridimensionnel déjà établi en tenant compte de la position réelle des capteurs d'images. Ces informations peuvent, le cas échéant, modifier certaines caractéristiques du modèle déjà établi, afin d'en affiner la précision.

Au-delà des aspects communs aux deux méthodes, chacune possède ses propres avantages et inconvénients.

D'un côté, la méthode de calcul de reconstruction tridimensionnelle stéréoscopique ne nécessite aucune information préalable à son application et peut s'adapter à une très grande diversité de scènes tridimensionnelles. Toutefois, ses performances sont dépendantes du type particulier de la scène observée. En particulier, lorsque des zones de la scène observée sont sans texture, présentent des reflets ou des occlusions, les performances de reconstruction de la méthode sont sensiblement dégradées. En outre, une limitation importante de la méthode est liée au fait qu'il est impératif d'utiliser au moins deux images bidimensionnelles distinctes pour pouvoir générer un modèle tridimensionnel représentant une scène tridimensionnelle quelconque.

D'un autre côté, la méthode de calcul de reconstruction tridimensionnelle par apprentissage s'appuie sur des algorithmes spécifiques (comme par exemple des algorithmes basés sur des réseaux de neurones profonds) pour générer des modèles numériques tridimensionnels à partir d'une seule ou de plusieurs images numériques bidimensionnelles. Ces algorithmes peuvent être entraînés c'est-à-dire qu'ils peuvent améliorer leur performance grâce à un processus d'apprentissage au cours duquel un algorithme est confronté à un ensemble important et varié d'images bidimensionnelles associées à des modèles tridimensionnels déterminés. Avantageusement, cette méthode est donc applicable indifféremment à tout type de scène. Ses performances ne dépendent en effet essentiellement que de la qualité de l'apprentissage effectué auparavant, et des données utilisées lors de cet apprentissage. En contrepartie, un objet ou une scène n'ayant pas été intégré à l'apprentissage ne sera reconstruit que de manière incomplète, voire pas du tout. En outre, de manière générale, la précision d'un modèle tridimensionnel généré par cette méthode reste, à l'heure actuelle, inférieure à la précision d'un tel modèle généré par la méthode de calcul de reconstruction tridimensionnelle stéréoscopique.

Le document WO2018/039269A1 divulgue un dispositif utilisant plusieurs capteurs d'images sur des lunettes à réalité augmentée. Ce dispositif utilise les images bidimensionnelles acquises pour déterminer, via une méthode de calcul par apprentissage, la position du dispositif par rapport à son environnement et pour faire une reconstruction tridimensionnelle dynamique d'une scène observée. La précision du modèle tridimensionnel reconstruit n'est toutefois pas un enjeu dans cette application. On note par ailleurs que le dispositif ne fait appel qu'à une seule des deux méthodes discutées plus haut.

Le document US2018/124371A1 divulgue une technique de reconstruction multi-vues basée sur la stéréoscopie et sur une fusion de cartes de profondeurs pondérée par des niveaux confiance. Cette technique fait donc également appel à une seule des deux méthodes discutées plus haut.

L'article "Deeper Depth Prediction with Fully Convolutional Residual Networks" (Laina et al., 25 Oct 2016, Fourth International Conference on 3D Vision (3DV), IEEE, DOI: 10.1109/3DV.2016.32) divulgue une technique de reconstruction par apprentissage à partir d'une seule image RGB, en remplacement des approches basées sur la stéréoscopie.

Enfin l'article "Weakly Supervised Deep Depth Prediction Leveraging Ground Control Points for Guidance" (Du Liang et al., 10 décembre 2018, IEEE Access, vol. 7, DOI:10.1109/ ACCESS.2018.2885773) utilise une technique de reconstruction par apprentissage, dans laquelle une carte de profondeur est reconstruite par apprentissage, à partir d'une seule image fournie en entrée. Dans cette technique, la stéréoscopie est employée comme source de contraintes durant la phase d'apprentissage, et durant la phase d'inférence la reconstruction ne fait appel qu'à une méthode d'apprentissage, c'est à dire également à une seule des deux méthodes discutées plus haut.

L'invention vise à supprimer, ou du moins atténuer, tout ou partie des inconvénients de l'art antérieur précités.

A cet effet, un premier aspect de l'invention propose un procédé dynamique d'imagerie tridimensionnelle selon la revendication 1, comprenant les étapes suivantes, exécutées par une unité de calcul :
- réception d'au moins deux images numériques bidimensionnelles représentant une scène tridimensionnelle observée, acquises par au moins un capteur d'images déterminé depuis au moins deux positions dans l'espace respectives ;
- génération, à partir des images numériques bidimensionnelles, sur la base d'une méthode de calcul de reconstruction tridimensionnelle stéréoscopique, d'un premier modèle numérique tridimensionnel intermédiaire associé à la scène tridimensionnelle observée ;
- génération, à partir des images numériques bidimensionnelles, sur la base d'une méthode de calcul de reconstruction tridimensionnelle par apprentissage, d'un second modèle numérique tridimensionnel intermédiaire associé à la scène tridimensionnelle observée, la génération du second modèle numérique tridimensionnel intermédiaire étant réalisée préalablement à la génération du premier modèle numérique tridimensionnel intermédiaire, et le second modèle numérique tridimensionnel intermédiaire généré étant utilisé comme a priori pour la génération du premier modèle numérique tridimensionnel intermédiaire par la méthode de calcul de reconstruction tridimensionnelle stéréoscopique ;
- génération, par combinaison des premier et second modèles numériques tridimensionnels intermédiaires, d'un modèle numérique tridimensionnel final, ladite génération comprenant la sélection, pour une portion déterminée du modèle numérique tridimensionnel final, de la portion correspondante de celui des premier et second modèles numériques tridimensionnels intermédiaires qui maximise un critère de qualité de la représentation de la scène tridimensionnelle observée sur la base d'une comparaison d'au moins un paramètre caractéristique desdits premier et second modèles numériques tridimensionnels intermédiaires pour ladite portion qui est représentatif de la qualité de la représentation de la scène tridimensionnelle observée ;
- stockage, dans une mémoire, d'informations numériques comprenant au moins une image numérique bidimensionnelle reçue, le modèle numérique tridimensionnel final associé à ladite image numérique bidimensionnelle et un paramètre caractéristique dudit modèle numérique tridimensionnel final, représentatif de la qualité de la représentation de la scène tridimensionnelle observée ; et,
- utilisation, des informations numériques stockées comme données d'apprentissage pour entraîner et ré-entraîner l'unité de calcul pour l'exécution de la méthode de calcul de reconstruction tridimensionnelle par apprentissage.

Grâce à l'invention, il est possible de combiner de façon optimale deux méthodes de calcul de reconstruction tridimensionnelle différentes pour générer un modèle numérique tridimensionnel final le plus fidèle possible. Cette combinaison va bien au-delà d'un simple choix entre deux méthodes de génération d'un modèle 3D qui peuvent être connues comme étant des alternatives équivalentes l'une de l'autre. Elle procure, selon l'invention, une réelle synergie, le second modèle numérique tridimensionnel intermédiaire généré étant utilisé comme *a priori* pour la génération du premier modèle numérique tridimensionnel intermédiaire par la méthode de calcul de reconstruction tridimensionnelle stéréoscopique. En effet, selon l'invention, non seulement la méthode par stéréoscopie alimente l'apprentissage, mais aussi la méthode par apprentissage dynamique donne un *a priori* pour la mise en œuvre de la méthode par stéréoscopie.

En outre, le procédé est autoenrichissant dans le sens où chaque nouveau modèle généré permet d'entraîner ou de ré-entraîner l'algorithme d'apprentissage en utilisant au moins partiellement les résultats obtenus par une méthode par stéréoscopie, et ceci dans un cadre d'apprentissage non supervisé. La méthode par stéréoscopie est capable de générer des modèles tridimensionnels même sur des scènes 3D qui n'étaient pas incluses dans l'apprentissage initial. Ces nouveaux modèles générés pourront donc constituer un nouveau sous ensemble, pouvant s'additionner aux données initiales d'apprentissage, pour conduire un réapprentissage. Celui-ci sera plus riche que l'apprentissage initial puisque les nouveaux modèles tridimensionnels n'y étaient pas encore pris en compte. Ceci permet d'améliorer les performances globales du procédé dans un processus autoenrichissant, où les apprentissages ou réapprentissages guident la stéréoscopie sans lui être indispensables, et la stéréoscopie fournit au fur et à mesure de l'utilisation de nouvelles données pour un réapprentissage.

Des modes de réalisation pris isolément ou en combinaison, prévoient en outre que :
- le procédé comprend en outre l'acquisition, par au moins un capteur d'image déterminé, de préférence un capteur vidéo passif de type CMOS ou de type CCD, des images numériques bidimensionnelles représentant la scène tridimensionnelle observée ;
- le procédé comprend en outre l'affichage du modèle numérique tridimensionnel final, par un dispositif d'affichage tel qu'un écran à affichage bidimensionnel à balayage ou à LED, des lunettes de réalité virtuelle ou augmentée, ou un écran à affichage tridimensionnel ;
- le paramètre caractéristique des modèles numériques tridimensionnels est l'incertitude associée à chacune des valeurs desdits modèles numériques tridimensionnels ;
- les données d'apprentissage utilisées par l'unité de calcul pour entraîner et ré-entraîner la méthode de calcul de reconstruction tridimensionnelle par apprentissage, comprennent :
   ▪ des données issues de bases de données, partagées ou non, comprenant des images numériques bidimensionnelles et des modèles numériques tridimensionnels associés ; et/ou
   ▪ des données comprenant des images numériques bidimensionnelles et des modèles numériques tridimensionnels associés issus de l'exécution du procédé par une autre unité de calcul ; et/ou
   ▪ des données comprenant des images numériques bidimensionnelles et des modèles numériques tridimensionnels associés issus de l'exécution d'un autre procédé par une unité de calcul.
- chaque modèle numérique tridimensionnel intermédiaire est soit une cartographie de profondeur soit un nuage de points tridimensionnel ;
- lors d'une ou plusieurs étapes de génération de modèles numériques tridimensionnels intermédiaires, une seconde unité de calcul déportée coopère avec l'unité de calcul pour générer ledit ou lesdits modèles numériques tridimensionnels intermédiaire ;
- les images numériques bidimensionnelles reçues sont des images numériques en couleur et dans lequel modèle numérique tridimensionnel final généré comprend des textures déterminées sur la base des couleurs desdites images numériques bidimensionnelles ;

Dans un second aspect, l'invention concerne également une unité de calcul selon la revendication 9, comprenant des moyens matériels et logiciels pour exécuter toutes les étapes du procédé selon l'aspect précédent.

Un dernier aspect de l'invention se rapporte à un dispositif d'imagerie tridimensionnelle selon la revendication 10, comprenant au moins un capteur d'images numérique, une mémoire et une unité de calcul selon l'aspect précédent.

### Brève description des figures

D'autres caractéristiques et avantages de l'invention apparaîtront encore à la lecture de la description qui va suivre. Celle-ci est purement illustrative et doit être lue en regard des dessins annexés sur lesquels :
**[****Fig. 1****]** est un diagramme d'étapes illustrant de manière simplifiée les étapes communes aux différentes méthodes connues de calcul de reconstruction tridimensionnelle pour la génération d'un modèle numérique tridimensionnel d'une scène ;
**[****Fig. 2****]** est une représentation schématique d'un système dans lequel peut être réalisé un mode de mise en œuvre du procédé selon l'invention ;
**[****Fig. 3****]** est un schéma fonctionnel d'un dispositif pour la mise en œuvre du procédé selon l'invention ;
**[****Fig. 4****]** est un diagramme d'étapes illustrant de manière simplifiée les étapes d'un mode de mise en œuvre du procédé selon l'invention ; et,
**[****Fig. 5****]** est une illustration schématique du processus itératif de la méthode de calcul de reconstruction tridimensionnelle stéréoscopique ;
**[****Fig. 6****]** est une illustration schématique de la méthode de calcul de reconstruction tridimensionnelle par apprentissage ;
**[****Fig. 7****]** est un diagramme d'étapes illustrant de manière simplifiée les étapes d'un autre mode de mise en œuvre du procédé selon l'invention.

### Description des modes de réalisation

Dans la description de modes de réalisation qui va suivre et dans les Figures des dessins annexés, les mêmes éléments ou des éléments similaires portent les mêmes références numériques aux dessins.

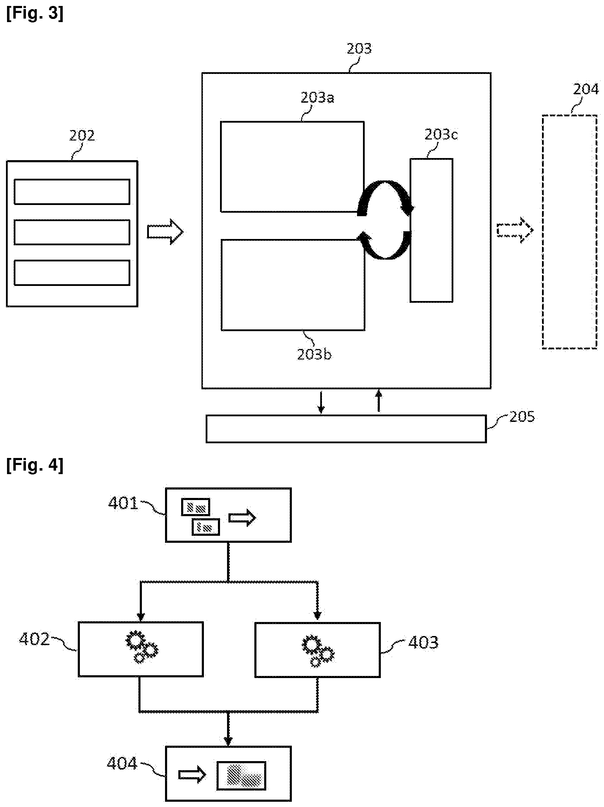

En référence à la **figure 2****,** à la **figure 3** et à la **figure 4****,** il va maintenant être décrit des modes de mises en œuvre du procédé d'imagerie tridimensionnelle dynamique selon l'invention.

Le terme « dynamique » désigne, dans le contexte des modes de réalisation de la présente invention, le fait que le procédé peut être exécuté de manière continue par une unité de calcul, par exemple de manière itérative. En particulier, chaque nouvelle acquisition d'une image ou d'images numériques bidimensionnelles représentant une scène tridimensionnelle donnée, peut entraîner l'exécution d'étapes du procédé. Et chaque exécution (i.e. chaque itération) du procédé entraîne la génération d'un modèle numérique tridimensionnel représentant la scène tridimensionnelle. En d'autres termes, le modèle numérique tridimensionnel généré lors d'une itération donnée du procédé constitue, le cas échéant, la mise à jour du modèle numérique tridimensionnel généré lors d'une itération antérieure du procédé, par exemple lors de l'itération précédente.

Par ailleurs, l'Homme du métier appréciera que par l'expression « scène tridimensionnelle » on désigne de manière la plus étendue possible tout élément ou toute combinaison d'éléments du monde réel, susceptible d'être observée par l'acquisition d'une ou plusieurs images numériques bidimensionnelles, par un ou plusieurs capteurs d'images numériques. Ces éléments comprennent, de manière non limitative, un ou plusieurs parmi des objets grands ou petits, des personnages ou des animaux, des paysages, des lieux, des bâtiments vus de l'extérieur, des pièces ou des espaces dans des bâtiments, etc.

Lors d'une première étape 401, l'unité de calcul 203 reçoit des données correspondant à des images numériques bidimensionnelles, acquises par les capteurs d'images 202a, 202b et 202c. Toutes ces images numériques bidimensionnelles sont des représentations de la même scène tridimensionnelle observée, en l'occurrence la scène tridimensionnelle 201, depuis des positions dans l'espace respectives, c'est-à-dire différentes les unes des autres. Dit autrement, chaque capteur fait l'acquisition d'une image numérique bidimensionnelle représentant la scène tridimensionnelle 201 sous un angle de vue particulier, différent de celui des autres images numériques bidimensionnelles de la scène qui sont disponibles.

Dans l'exemple représenté à la figure 2 et à la figure 3, les trois capteurs d'images 202a, 202b et 202c forment une unité d'acquisition 202 qui fait l'acquisition de manière récurrente d'un trio d'images numériques représentant la scène tridimensionnelle 201 depuis des points de vue différents (i.e., selon différents angles de vue). L'homme du métier appréciera néanmoins que le nombre de capteurs d'images utilisé n'est pas limité à trois et doit simplement être supérieur ou égal à l'unité. Selon l'invention, les différentes méthodes de calcul de reconstruction tridimensionnelle mise en œuvre dans la suite du procédé nécessitent au moins deux images bidimensionnelles de la même scène ayant été acquises par un unique capteur d'images à différents moments dans le temps et sous différents angles de vue, ou bien par une pluralité de capteurs d'images orientés différemment vers la scène concernée.

De manière générale, les capteurs d'images utilisés pour faire l'acquisition d'images numériques bidimensionnelles peuvent être n'importe quel capteur numérique classiquement utilisé pour ce type d'acquisition. Par exemple, il peut s'agir de capteurs vidéo passifs de type CMOS (de l'anglais « *Complementary Metal-Oxide-Semiconductor* ») ou de type CCD (de l'anglais « *Charge-Coupled Device* »). En outre, ces capteurs peuvent être intégrés à un dispositif d'acquisition d'image accessible au grand public tel qu'une caméra vidéo, un smartphone, ou encore des lunettes de réalité augmentée. Enfin, dans certains modes de mise en œuvre du procédé, ces capteurs font l'acquisition d'images numériques qui sont en couleurs et lesdites couleurs permettent d'intégrer des textures au modèle numérique tridimensionnel généré par la mise en œuvre du procédé. De cette manière, le rendu final obtenu est plus fidèle à la scène tridimensionnelle observée.

L'unité de calcul 203 comprend des moyens matériels et logiciels qui lui permettent d'exécuter les différentes étapes du procédé. Typiquement, une telle unité de calcul comprend une carte mère, un processeur et au moins une mémoire. En outre, dans des modes de réalisation particuliers, le ou les capteurs d'images et l'unité de calcul peuvent être intégrés à un même dispositif ou appareil. Par exemple, cet appareil peut être un smartphone qui fait l'acquisition d'images numériques bidimensionnelles qui sont directement traitées par son unité de calcul. Avantageusement, le transfert des données associées aux images est ainsi simple et sécurisé.

Dans une variante du procédé non représentée, certaines étapes, et en particulier les étapes décrites plus loin, peuvent être exécutées en tout ou partie par une seconde unité de calcul déportée qui coopère avec l'unité de calcul 203. Par exemple, l'unité de calcul 203 peut échanger des données (notamment des données d'image) avec un calculateur distant. Avantageusement, cela permet d'augmenter la puissance de calcul disponible et, par conséquent, la rapidité d'exécution des étapes du procédé concernées. En outre, de telles données peuvent être transmises selon un protocole adapté à ce type de communication comme par exemple le protocole HTTP.

Lors de l'étape 402, l'unité de calcul 203 génère un premier modèle numérique tridimensionnel intermédiaire, à partir des images numériques bidimensionnelles qu'elle a reçues. Ce premier modèle numérique tridimensionnel intermédiaire est une représentation en 3D de la scène tridimensionnelle observée. Dans un exemple de mode de mise en œuvre non-limitatif, ce modèle numérique tridimensionnel intermédiaire peut être une carte de profondeur (en anglais « *depth map* ») ou un nuage de points tridimensionnel. Dans tous les cas, il est généré par l'intermédiaire d'une méthode de calcul de reconstruction tridimensionnelle dite stéréoscopique. En particulier, l'unité de calcul 203 intègre une sous-unité dite sous-unité de reconstruction stéréoscopique 203a spécifiquement dédiée à la reconstruction du modèle numérique tridimensionnel selon cette méthode de calcul.

Comme il a déjà été dit en introduction, une telle méthode est connue en soi de l'homme du métier. Elle s'appuie en particulier sur l'observation d'une même scène tridimensionnelle selon au moins deux angles différents pour pouvoir reconstruire un modèle tridimensionnel de la scène. Un exemple d'utilisation de cette méthode est décrit dans l'article *"*StereoScan: Dense 3D Reconstruction in Real-time", Geiger & al, 2011. En outre, il existe de nombreux algorithmes appliquant cette méthode, libres d'utilisation, et regroupés dans des librairies telles que, par exemple, la librairie qui peut être trouvée à l'adresse : http://www.cvlibs.net/software/libviso/.

Une telle méthode de calcul ne nécessite pas un *a priori* pour pouvoir reconstruire un modèle numérique tridimensionnel à partir d'images numériques bidimensionnelles. Dit autrement, un modèle tridimensionnel peut être obtenu uniquement sur la base d'images bidimensionnelles sans qu'aucune autre donnée ne soit préalablement connue et utilisée par la méthode de calcul.

Néanmoins, selon l'invention l'utilisation d'un *a priori,* i.e. de données qui servent de point de départ au calcul de reconstruction stéréoscopique, permet un gain en temps de calcul et améliore la précision de la méthode. En effet, une telle méthode de calcul procède de manière itérative en réduisant progressivement les dimensions de zones d'intérêt du calcul (i.e. des volumes) au sein desquelles les surfaces tridimensionnelles des différents éléments qui composent la scène tridimensionnelle observée sont reconstruites. L'utilisation d'un *a priori* permet donc de cibler plus précisément et plus rapidement les zones en question.

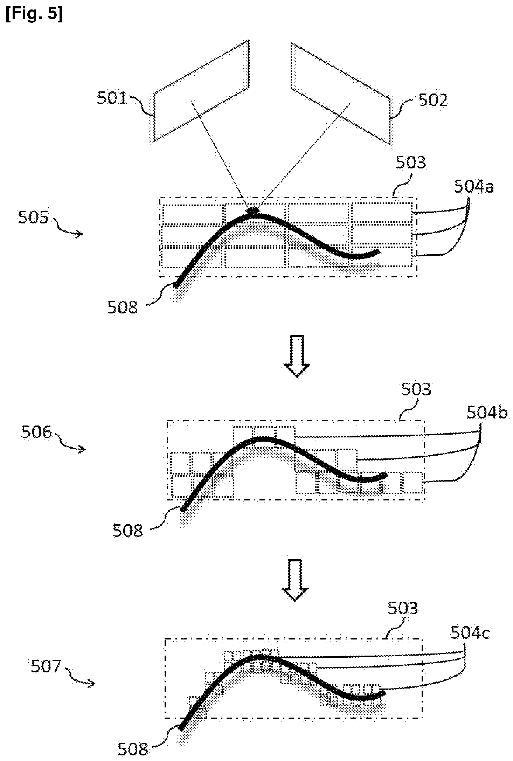

La **figure 5** montre une description schématique du processus itératif d'une méthode de calcul de reconstruction tridimensionnelle stéréoscopique.

Dans l'exemple représenté, les deux capteurs d'images 501 et 502 font l'acquisition d'images numériques bidimensionnelles représentant une même surface tridimensionnelle 508 (elle-même comprise dans une scène tridimensionnelle observée plus vaste).

Pour estimer au mieux la forme de la surface 508, les calculs sont réalisés dans un volume de recherche 503 qui délimite une zone d'intérêt du calcul. Une première estimation 505 de cette forme (i.e. une première itération du calcul) est réalisée dans ce volume. En particulier, au sein du volume 503, la méthode de calcul est appliquée dans des voxels 504a (i.e. des sous-divisions volumétriques de l'espace tridimensionnel dans lequel la scène est intégrée). Pour chacun de ces voxels 504a, un indice quantitatif photométrique est calculé, par exemple un indice de type NCC (de l'anglais « *Normalized Cross Correlation* »). La deuxième estimation 506 n'est ensuite réalisée que dans les voxels où l'indice quantitatif photométrique est supérieure à une valeur déterminée. En particulier, lesdits voxels 504a sélectionnés sont subdivisés en une pluralité de voxels plus petits 504b au sein de chacun desquels une nouvelle estimation est réalisée.

L'estimation finale 507 intervient après un nombre d'itérations déterminé qui est suffisant pour atteindre un niveau de précision attendu dans l'estimation de la forme de la surface tridimensionnelle. En particulier, la précision obtenue découle directement de la taille des voxels 504c utilisés lors de l'estimation finale. Un modèle numérique tridimensionnel représentant, entre-autres, la surface tridimensionnelle, est ensuite généré à partir de cette estimation finale.

En référence maintenant à la **figure 4****,** l'étape 403 consiste en la génération, par l'unité de calcul 203 d'un second modèle numérique tridimensionnel intermédiaire à partir des images numériques bidimensionnelles qu'elle a reçues. Ce second modèle numérique tridimensionnel intermédiaire est aussi une représentation de la scène tridimensionnelle observée. En outre, dans le cas du modèle numérique tridimensionnel généré par une méthode de calcul par apprentissage, le modèle ne peut être qu'une cartographie de profondeur. Cette dernière peut toutefois être facilement convertie ultérieurement, selon une méthode connue en soi de l'Homme du métier, en un nuage de points tridimensionnel.

Toutefois, à la différence du premier modèle numérique tridimensionnel intermédiaire décrit plus haut, ce modèle est généré par l'intermédiaire d'une méthode de calcul de reconstruction tridimensionnelle dite par apprentissage. En particulier, l'unité de calcul 203 intègre une sous-unité dite sous-unité de reconstruction par apprentissage 203b, qui est spécifiquement dédiée à la reconstruction du modèle numérique tridimensionnel selon cette méthode de calcul.

Là encore, comme il a déjà été dit en introduction, une telle méthode est connue en soi de l'homme du métier en sorte que sa description détaillée sortirait du cadre de la présente description. L'Homme du métier appréciera que la mise en œuvre de cette méthode s'appuie en particulier sur un apprentissage (aussi appelé entraînement) préalable. Au cours de cet apprentissage, la mise en œuvre de la méthode utilise une base de données importante au sein de laquelle de nombreuses images numériques bidimensionnelles sont déjà associées à des modèles numériques tridimensionnels. Un exemple d'utilisation de cette méthode est décrit par exemple dans l'article précité *"*Deeper depth prediction with fully convolutional residual networks", Laina & al, 2016. En outre, il existe aussi de nombreux algorithmes appliquant cette méthode, libres d'utilisation, et regroupés dans des librairies telles que, par exemple, la librairie qui peut être trouvée à l'adresse : https://github.com/iro-cp/FCRN-DepthPrediction.

L'homme du métier appréciera qu'en règle générale l'ordre des étapes 402 et 403 est indifférent, et ne se limite pas à l'exemple considéré ici en référence au diagramme d'étapes de la figure 4, exemple qui n'est pas couvert par les revendications.

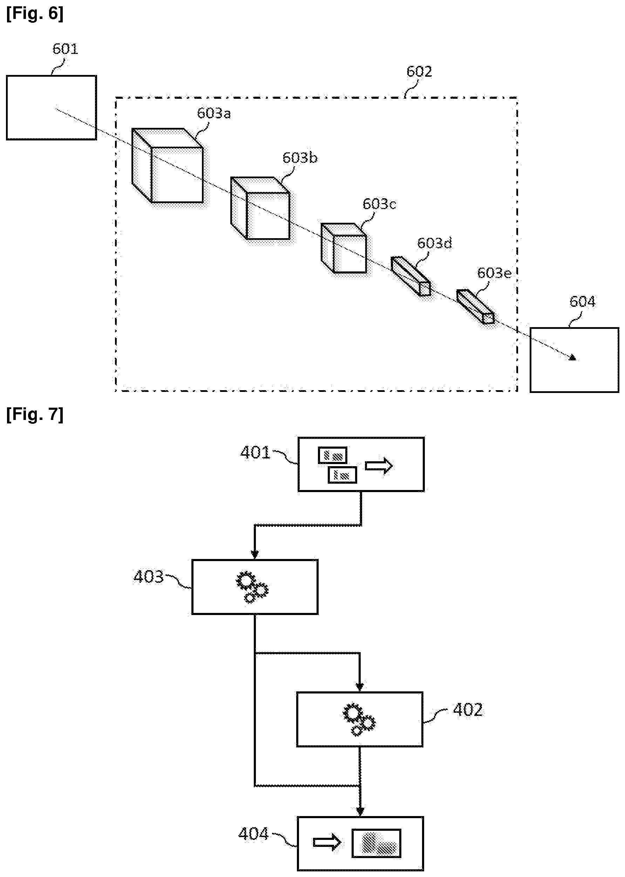

La **figure 6** montre une description schématique d'un exemple du processus d'apprentissage d'une méthode de calcul de reconstruction tridimensionnelle par apprentissage.

Dans l'exemple représenté à la **figure 6****,** la méthode de calcul s'appuie sur un réseau de neurones d'apprentissage profond ou DNN (de l'anglais : « *Deep Neural Network* ») 602 pour réaliser la reconstruction d'un modèle numérique tridimensionnel 604 à partir d'une seule image numérique bidimensionnelle 601. Ce réseau peut apprendre, à partir d'un ensemble d'entrainement (i.e. d'une base de données) couplant chaque image numérique bidimensionnelle déterminée avec un modèle numérique tridimensionnel donné, les poids à donner à chaque couche d'apprentissage de manière à prédire les modèles numériques tridimensionnels le plus précisément possible à partir de l'image numérique bidimensionnelle associée. Une fois entraîné, le réseau de neurones peut être utilisé de manière prédictive. Ainsi, avantageusement, cette méthode ne nécessite qu'une seule image d'une scène observée pour pouvoir générer un modèle numérique tridimensionnel de la scène en question.

Le processus d'apprentissage d'un tel DNN est connu en soi de l'Homme du métier. La figure 6 illustre un exemple de tel processus, de manière simplifiée. La première phase de l'apprentissage implémente trois couches de convolution 603a, 603b et 603c successivement. A chaque implémentation de ces couches de convolution ensuite de la première, la taille de la matrice de convolution qui leur est respectivement associée (on parle aussi de kernel) est réduite par rapport à l'implémentation de la couche précédente. La deuxième phase comporte l'implémentation de deux couches de réseaux de neurones entièrement connectées 603d et 603e. La dernière couche 603e est entièrement connectée à la carte de profondeur finale.

De retour à la description de la **figure 4****,** à l'étape 404, l'unité de calcul 203 fait appel à une unité décisionnelle 203c pour générer un modèle numérique tridimensionnel final, par une combinaison des premier et second modèles numériques tridimensionnels intermédiaires. En particulier, l'unité de calcul 203 est adaptée pour sélectionner chaque portion du modèle numérique tridimensionnel final à générer, soit dans le premier modèle numérique tridimensionnel intermédiaire soit dans le second modèle numérique bidimensionnel intermédiaire, en fonction d'un critère de qualité de la représentation de la scène tridimensionnelle observée, sur la base d'une comparaison d'au moins un paramètre caractéristique desdits premier et second modèles numériques tridimensionnels intermédiaires. Le paramètre caractéristique est représentatif de la qualité de la représentation de la scène tridimensionnelle observée. En d'autres termes, l'unité de calcul sélectionne la portion correspondante de celui des premier et second modèles numériques tridimensionnels intermédiaires (générés respectivement par la méthode de calcul stéréoscopique et la méthode de calcul par apprentissage) qui maximise le critère de qualité de la représentation de la scène tridimensionnelle observée, sur la base d'une comparaison du paramètre caractéristique desdits premier et second modèles numériques tridimensionnels intermédiaires pour ladite portion.

Le critère de qualité de la représentation de la scène observée permet à chaque fois, c'est-à-dire pour chaque portion du modèle numérique tridimensionnel final à générer, de sélectionner le modèle numérique tridimensionnel intermédiaire qui représente le plus précisément la scène tridimensionnelle observée. Il s'agit de celui des deux modèles numériques tridimensionnels intermédiaires dont la portion correspondante maximise ce critère de qualité. Dans des modes de réalisation, ce résultat peut être obtenu en comparant un paramètre caractéristique commun aux deux modèles, sur la base duquel on sélectionne une portion de l'un ou bien une portion de l'autre desdits modèles intermédiaires, respectivement, en fonction du résultat de la comparaison, ces portions correspondant à la portion considérée du modèle final à générer c'est-à-dire la portion qui modélise la même partie de la scène observée.

Par exemple, dans un mode de mise en œuvre particulier du procédé, le paramètre caractéristique des modèles numériques tridimensionnels intermédiaires peut être l'incertitude associée à chacune des valeurs qui ont été déterminées (i.e. au cours des étapes 402 et 403 du procédé) pour chacun des modèles numériques tridimensionnels. Plus précisément, l'unité décisionnelle est adaptée pour comparer l'incertitude connue entre les deux modèles, pour chaque voxel des modèles intermédiaires qui sont respectivement associés à un même point déterminé dans l'espace, de la scène tridimensionnelle observée.

Dans un tel mode de mise en œuvre, on peut prévoir que :
- si uniquement le premier ou le second modèle numérique tridimensionnel intermédiaire présente une valeur pour un voxel donné de la scène tridimensionnelle observée, alors c'est cette valeur qui est attribuée au modèle numérique tridimensionnel final ;
- si à la fois le premier et le second modèle numérique tridimensionnel intermédiaires présentent une valeur pour un voxel donné de la scène tridimensionnelle observée, alors la valeur attribuée au modèle numérique tridimensionnel final est sélectionnée parmi ces deux valeurs respectives, sur la base de la comparaison des incertitudes respectives des deux modèles numériques tridimensionnels qui sont associées à la valeur de ce voxel ; et enfin,
- si aucun modèle numérique tridimensionnel intermédiaire ne présente une valeur pour le voxel donné de la scène tridimensionnelle observée, alors aucune valeur n'est attribuée à ce voxel, ou bien, en variante, la valeur attribuée à ce voxel est déterminée selon une méthode de calcul dite de lissage. Une telle méthode consiste, en une interpolation de la valeur d'un élément basée sur celles des voxels voisins dans la scène tridimensionnelle observée.

En conclusion, le procédé permet d'optimiser la précision du modèle numérique tridimensionnel final obtenu en combinant les qualités respectives de deux approches différentes. Le modèle est ainsi le plus fidèle possible à la scène tridimensionnelle réellement observée.

L'Homme du métier appréciera que l'invention peut être généralisée à plus de deux modèles numériques tridimensionnels intermédiaires, et à plus de deux images bidimensionnelles de la scène tridimensionnelle observée. Par exemple, une pluralité de modèles numériques tridimensionnels intermédiaires de l'un et ou de l'autre des types envisagés dans ce qui précède, peuvent être générés à partir de p-uplets d'images numériques bidimensionnelles respectifs, où p est un entier supérieur ou égal à l'unité. En outre, d'autres types de modèles numériques tridimensionnels intermédiaires que les deux types décrits dans ce qui précède peuvent être envisagés, en fonction des spécificités propres à chaque application.

De plus, dans des modes de mise en oeuvre particulier du procédé, le modèle numérique tridimensionnel final peut être restitué à un utilisateur par l'intermédiaire d'un dispositif d'affichage. Par exemple, le modèle peut être projeté sur un écran à affichage bidimensionnel à balayage ou à LED, sur des lunettes de réalité virtuelle ou augmentée ou encore sur un écran à affichage tridimensionnel.

Enfin, pour réduire la durée des calculs réalisés lors des étapes de génération de modèles numériques tridimensionnels, les calculs intrinsèques aux méthodes de calcul peuvent être réalisés selon un modèle de calcul de type à rendu fovéal. Les termes « à rendu fovéal » (en anglais « *Foveated imaging* »), par analogie avec la vision humaine, désignent un modèle de calcul qui vise à obtenir un résultat plus précis au centre de l'image ou du modèle calculé, et moins précis en périphérie. La puissance de calcul peut ainsi être réduite en périphérie et entraîner une économie de ressources et donc une diminution du temps de calcul global.

Outre les avantages déjà décrits, d'autres avantages du procédé selon l'invention découlent du fait que la combinaison de deux méthodes de calcul différentes permet additionnellement de faire coopérer les deux méthodes entre-elles pour améliorer leurs performances respectives.

En premier lieu, le procédé selon l'invention comporte une étape de stockage dans une mémoire des informations numériques obtenues à l'issue d'une itération du procédé pour les utiliser afin d'améliorer les performances du procédé lors d'une itération suivante, c'est-à-dire pour la génération d'un autre modèle numérique tridimensionnel final d'une autre scène observée ou de la même scène observée, considérée par exemple d'un autre point de vue. Plus précisément, l'unité de calcul 203 transfère à une mémoire 205 un ensemble de données comprenant les images numériques bidimensionnelles qu'elle a reçues, le modèle numérique tridimensionnel final associé auxdites images numériques bidimensionnelles et un ou des paramètres caractéristiques de ce modèle. De cette manière, les informations numériques ainsi stockées sont, selon l'invention, réutilisées par l'unité de calcul comme données d'apprentissage lui permettant d'entraîner, ou de ré-entraîner le cas échéant, l'unité de calcul à cette méthode de calcul de reconstruction tridimensionnelle par apprentissage. Ainsi, avantageusement, en plus de la base de données initialement utilisée pour entraîner l'unité de calcul, chaque nouvelle itération du procédé complète et enrichit l'apprentissage de l'unité de calcul pour la mise en oeuvre continue de la méthode et, en conséquence, son niveau de performance.

En outre, dans des modes de mise en oeuvre particulier du procédé, les données décrites plus haut et/ou d'autres données supplémentaires peuvent contribuer à affiner l'apprentissage de l'unité de calcul lors d'une phase dite phase de ré-apprentissage. Par exemple, il peut s'agir de données provenant d'un constructeur automobile fournissant un ensemble d'images numériques représentant un véhicule en association avec des modèles numériques tridimensionnels dudit véhicule qui sont prédéfinis sur la base desdites images. Il peut aussi s'agir de données issues de l'exécution du même procédé par une autre unité de calcul comparable (par exemple, par l'intermédiaire d'un autre dispositif ou par un autre utilisateur), ou encore de données issues de l'exécution d'un autre procédé sans rapport avec celui de l'invention (par exemple, une acquisition laser d'une scène tridimensionnelle) mais conduisant lui aussi à la génération d'un modèle numérique tridimensionnel à partir d'image(s) numériques bidimensionnelle(s). En outre, ces données peuvent aussi être issues d'une plateforme de partage de données d'apprentissage capables d'agréger de telles données en provenance de sources multiples. Dans tous les cas, la méthode de calcul de reconstruction tridimensionnelle peut être régulièrement ré-entraînée afin d'améliorer son niveau de performance. On parle en particulier d'un auto-enrichissement du procédé. En effet, avantageusement, chaque itération du procédé est susceptible d'en améliorer les performances.

En second lieu, comme il a déjà été dit plus haut, la méthode de calcul de reconstruction tridimensionnelle stéréoscopique selon l'invention tire un bénéfice de l'utilisation d'un *a priori* dans la réalisation de ses calculs. Ainsi, la méthode de calcul de reconstruction tridimensionnelle par apprentissage ayant été entraînée préalablement à toute mise en œuvre concrète (itération) du procédé, grâce à l'utilisation d'une base de données spécifique dite base de données d'apprentissage, cette dernière fournit un modèle numérique tridimensionnel qui sert d'*a priori* à la méthode de calcul de reconstruction tridimensionnelle stéréoscopique.

La figure 7 montre un diagramme d'étapes d'un procédé selon l'invention qui exploite cette possibilité. Dans ce procédé selon l'invention, chacune des étapes 401 à 404 qui ont déjà été décrites en référence à la figure 4 sont reproduites. Toutefois, la chronologie du déroulement de ces étapes est spécifique. En particulier, l'étape 403 de génération du second modèle numérique tridimensionnel intermédiaire est réalisée préalablement à l'étape 402 de génération du premier modèle numérique tridimensionnel intermédiaire. De cette manière, le second modèle numérique tridimensionnel intermédiaire généré est utilisé comme *a priori* par la méthode de calcul de reconstruction tridimensionnelle stéréoscopique pour générer son modèle numérique tridimensionnel plus précisément et plus rapidement. Par exemple, en référence au processus itératif d'une méthode de calcul de reconstruction tridimensionnelle stéréoscopique montré à la figure 5, l'utilisation d'un tel *a priori* permettrait de commencer directement à l'étape d'estimation 506 ou à tout autre étape d'estimation ultérieure plus précise que celle de l'estimation 505. En outre, l'étape 404 du procédé reste inchangée et le modèle numérique tridimensionnel final reste une combinaison des deux modèles intermédiaires exploitant dans tous les cas, pour chaque portion du modèle final, le modèle intermédiaire qui est le plus précis (i.e. le plus fidèle à la scène tridimensionnelle observée).

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l invention, qui est définie par les revendications.

## Revendications

1. Procédé dynamique d'imagerie tridimensionnelle comprenant les étapes suivantes, exécutées par une unité de calcul (203) :
- réception (401) d'au moins deux images numériques bidimensionnelles représentant une scène tridimensionnelle observée, acquises par au moins un capteur d'images déterminé depuis au moins deux positions dans l'espace respectives ;
- génération (402), à partir des images numériques bidimensionnelles, sur la base d'une méthode de calcul de reconstruction tridimensionnelle stéréoscopique, d'un premier modèle numérique tridimensionnel intermédiaire associé à la scène tridimensionnelle observée ;
- génération (403), à partir des images numériques bidimensionnelles, sur la base d'une méthode de calcul de reconstruction tridimensionnelle par apprentissage, d'un second modèle numérique tridimensionnel intermédiaire associé à la scène tridimensionnelle observée, la génération (403) du second modèle numérique tridimensionnel intermédiaire étant réalisée préalablement à la génération (402) du premier modèle numérique tridimensionnel intermédiaire, et le second modèle numérique tridimensionnel intermédiaire généré étant utilisé comme a priori pour la génération du premier modèle numérique tridimensionnel intermédiaire par la méthode de calcul de reconstruction tridimensionnelle stéréoscopique ;
- génération (404), par combinaison des premier et second modèles numériques tridimensionnels intermédiaires, d'un modèle numérique tridimensionnel final, ladite génération comprenant la sélection, pour une portion déterminée du modèle numérique tridimensionnel final, de la portion correspondante de celui des premier et second modèles numériques tridimensionnels intermédiaires qui maximise un critère de qualité de la représentation de la scène tridimensionnelle observée sur la base d'une comparaison d'au moins un paramètre caractéristique desdits premier et second modèles numériques tridimensionnels intermédiaires pour ladite portion qui est représentatif de la qualité de la représentation de la scène tridimensionnelle observée ;
- stockage, dans une mémoire, d'informations numériques comprenant au moins une image numérique bidimensionnelle reçue, le modèle numérique tridimensionnel final associé à ladite image numérique bidimensionnelle et un paramètre caractéristique dudit modèle numérique tridimensionnel final, représentatif de la qualité de la représentation de la scène tridimensionnelle observée ; et,
- utilisation des informations numériques stockées comme données d'apprentissage pour entraîner et réentraîner l'unité de calcul pour l'exécution de la méthode de calcul de reconstruction tridimensionnelle par apprentissage.

2. Procédé selon la revendication 1, comprenant en outre l'acquisition, par au moins un capteur d'image déterminé, de préférence un capteur vidéo passif de type CMOS ou de type CCD, des images numériques bidimensionnelles représentant la scène tridimensionnelle observée.

3. Procédé selon la revendication 1 ou la revendication 2, comprenant en outre l'affichage du modèle numérique tridimensionnel final, par un dispositif d'affichage tel qu'un écran à affichage bidimensionnel à balayage ou à LED, des lunettes de réalité virtuelle ou augmentée, ou un écran à affichage tridimensionnel.

4. Procédé selon l'une quelconque des revendications 1 à 3, dans lequel le paramètre caractéristique des modèles numériques tridimensionnels est l'incertitude associée à chacune des valeurs desdits modèles numériques tridimensionnels.

5. Procédé selon l'une quelconque des revendications 1 à 4, dans lequel, les données d'apprentissage utilisées par l'unité de calcul pour entraîner et ré-entraîner la méthode de calcul de reconstruction tridimensionnelle par apprentissage, comprennent :
- des données issues de bases de données, partagées ou non, comprenant des images numériques bidimensionnelles et des modèles numériques tridimensionnels associés ; et/ou
- des données comprenant des images numériques bidimensionnelles et des modèles numériques tridimensionnels associés issus de l'exécution du procédé par une autre unité de calcul ; et/ou
- des données comprenant des images numériques bidimensionnelles et des modèles numériques tridimensionnels associés issus de l'exécution d'un autre procédé par une unité de calcul.

6. Procédé selon l'une quelconque des revendications 1 à 5, dans lequel, chaque modèle numérique tridimensionnel intermédiaire est soit une cartographie de profondeur soit un nuage de points tridimensionnel.

7. Procédé selon l'une quelconque des revendications 1 à 6, dans lequel, lors d'une ou plusieurs étapes de génération de modèles numériques tridimensionnels intermédiaires, une seconde unité de calcul déportée coopère avec l'unité de calcul pour générer ledit ou lesdits modèles numériques tridimensionnels intermédiaire.

8. Procédé selon l'une quelconque des revendications 1 à 7, dans lequel, les images numériques bidimensionnelles reçues sont des images numériques en couleur et dans lequel modèle numérique tridimensionnel final généré comprend des textures déterminées sur la base des couleurs desdites images numériques bidimensionnelles.

9. Unité de calcul (203), comprenant des moyens matériels et logiciels pour exécuter toutes les étapes du procédé selon l'une quelconque des revendications 1 à 8.

10. Dispositif d'imagerie tridimensionnelle comprenant au moins un capteur d'images numérique (202a, 202b, 202c), une mémoire (205) et une unité de calcul 203) selon la revendication 9.

## Patentansprüche

1. Verfahren zur dynamischen dreidimensionalen Bildgebung, welches die Schritte umfasst, die von einer Recheneinheit (203) ausgeführt werden:
- Empfangen (401) von mindestens zwei zweidimensionalen digitalen Bildern, die eine beobachtete dreidimensionale Szene darstellen und von mindestens einem bestimmten Bildsensor aus mindestens zwei jeweiligen Positionen im Raum aufgenommen wurden;
- Erzeugen (402) eines ersten dreidimensionalen numerischen Zwischenmodells, das der beobachteten dreidimensionalen Szene zugeordnet ist, aus den zweidimensionalen digitalen Bildern auf der Grundlage eines stereoskopischen dreidimensionalen Rekonstruktionsberechnungsverfahrens;
- Erzeugen (403) eines zweiten dreidimensionalen numerischen Zwischenmodells, das der beobachteten dreidimensionalen Szene zugeordnet ist, aus den zweidimensionalen digitalen Bildern auf der Grundlage eines Verfahrens zur dreidimensionalen Rekonstruktionsberechnung durch Lernen, wobei die Erzeugung (403) des zweiten dreidimensionalen numerischen Zwischenmodells vor der Erzeugung (402) des ersten dreidimensionalen numerischen Zwischenmodells erfolgt und das erzeugte zweite dreidimensionale numerische Zwischenmodell als A-priori-Modell für die Erzeugung des ersten dreidimensionalen numerischen Zwischenmodells mittels des stereoskopischen dreidimensionalen Rekonstruktionsberechnungsverfahrens verwendet wird;
- Erzeugen (404) eines endgültigen dreidimensionalen numerischen Modells durch Kombination des ersten und des zweiten dreidimensionalen numerischen Zwischenmodells, wobei das Erzeugen umfasst, Auswählen, für einen bestimmten Abschnitt des endgültigen dreidimensionalen numerischen Modells, des entsprechenden Abschnitts des ersten oder des zweiten dreidimensionalen numerischen Zwischenmodells, der ein Qualitätskriterium der Darstellung der beobachteten dreidimensionalen Szene maximiert, basierend auf einem Vergleich mindestens eines charakteristischen Parameters des ersten und des zweiten dreidimensionalen numerischen Zwischenmodells für diesen Abschnitt, der repräsentativ für die Qualität der Darstellung der beobachteten dreidimensionalen Szene ist;
- Speichern von digitalen Informationen in einem Speicher, die mindestens ein empfangenes zweidimensionales digitales Bild, das diesem zweidimensionalen digitalen Bild zugeordnete endgültige dreidimensionale numerische Modell und einen charakteristischen Parameter des endgültigen dreidimensionalen numerischen Modells umfasst, der repräsentativ für die Qualität der Darstellung der beobachteten dreidimensionalen Szene ist; und
- Verwenden der gespeicherten digitalen Informationen als Lerndaten, um die Recheneinheit für die Ausführung des Verfahrens zur dreidimensionalen Rekonstruktionsberechnung durch Lernen zu trainieren und erneut zu trainieren.

2. Verfahren nach Anspruch 1, welches ferner die Erfassung von zweidimensionalen digitalen Bildern, die die beobachtete dreidimensionale Szene darstellen, durch mindestens einen bestimmten Bildsensor, vorzugsweise einen passiven Videosensor vom CMOS-Typ oder vom CCD-Typ, umfasst.

3. Verfahren nach Anspruch 1 oder Anspruch 2, welches ferner die Darstellung des endgültigen dreidimensionalen numerischen Modells durch eine Anzeigevorrichtung wie einen zweidimensionalen Scan- oder LED-Bildschirm, eine Virtual- oder Augmented-Reality-Brille oder einen dreidimensionalen Bildschirm umfasst.

4. Verfahren nach einem der Ansprüche 1 bis 3, wobei der charakteristische Parameter der dreidimensionalen numerischen Modelle die mit jedem der Werte dieser dreidimensionalen numerischen Modelle verbundene Unsicherheit ist.

5. Verfahren nach einem der Ansprüche 1 bis 4, wobei die von der Recheneinheit verwendeten Lerndaten zum Trainieren und erneutem Trainieren des Verfahrens zur Berechnung der dreidimensionalen Rekonstruktion durch Lernen umfassen:
- Daten aus Datenbanken, unabhängig davon, ob diese gemeinsam genutzt werden oder nicht, die zweidimensionalen digitalen Bilder und zugehörige dreidimensionale numerische Modelle umfassen; und/oder
- Daten, die zweidimensionale digitale Bilder und zugehörige dreidimensionale numerische Modelle umfassen, die aus der Ausführung des Verfahrens durch eine andere Recheneinheit resultieren; und/oder
- Daten, die zweidimensionale digitale Bilder und zugehörige dreidimensionale numerische Modelle umfassen, die aus der Ausführung eines anderen Verfahrens durch eine Recheneinheit resultieren.

6. Verfahren nach einem der Ansprüche 1 bis 5, worin jedes dreidimensionale numerische Zwischenmodell entweder eine Tiefenkarte oder eine dreidimensionale Punktwolke ist.

7. Verfahren nach einem der Ansprüche 1 bis 6, wobei während eines oder mehrerer Schritte zur Erzeugung dreidimensionaler numerischer Zwischenmodelle eine zweite entfernte Recheneinheit mit der Recheneinheit zusammenwirkt, um das eine oder die mehreren dreidimensionalen numerischen Zwischenmodelle zu erzeugen.

8. Verfahren nach einem der Ansprüche 1 bis 7, worin die empfangenen zweidimensionalen digitalen Bilder farbige digitale Bilder sind und worin das abschließend erzeugte dreidimensionale numerische Modell Texturen umfasst, die auf der Grundlage der Farben der genannten zweidimensionalen digitalen Bilder bestimmt werden.

9. Recheneinheit (203), welche Hardware- und Softwaremittel zum Ausführen aller Schritte des Verfahrens gemäß einem der Ansprüche 1 bis 8 umfasst.

10. Dreidimensionale Bildgebungsvorrichtung, die mindestens einen digitalen Bildsensor (202a, 202b, 202c), einen Speicher (205) und eine Recheneinheit (203) gemäß Anspruch 9 umfasst.

## Claims

1. Dynamic three-dimensional imaging method comprising the following steps, executed by a calculating unit (203):
- receiving (401) at least two two-dimensional digital images representing an observed three-dimensional scene, acquired by at least one determined image sensor from at least two respective positions in space;
- generating (402), from the two-dimensional digital images, based on a stereoscopic three-dimensional reconstruction calculation method, a first intermediate three-dimensional numerical model associated with the observed three-dimensional scene;
- generating (403), from the two-dimensional digital images, based on a method of three-dimensional reconstruction calculation by learning, a second intermediate three-dimensional numerical model associated with the observed three-dimensional scene, the generation (403) of the second intermediate three-dimensional numerical model being carried out prior to the generation (402) of the first intermediate three-dimensional numerical model, and the generated second intermediate three-dimensional numerical model being used as an a priori for the generation of the first intermediate three-dimensional numerical model by the stereoscopic three-dimensional reconstruction calculation method;
- generating (404), by combination of the first and second intermediate three-dimensional numerical models, a final three-dimensional numerical model, with said generation comprising selecting, for a determined portion of the final three-dimensional numerical model, the corresponding portion of that of the first and second intermediate three-dimensional numerical models which maximizes a quality criterion of the representation of the observed three-dimensional scene based on a comparison of at least one characteristic parameter of said first and second intermediate three-dimensional numerical models for said portion which is representative of the quality of the representation of the observed three-dimensional scene;
- storing, in a memory, digital information comprising at least one received two-dimensional digital image, the final three-dimensional numerical model associated with said two-dimensional digital image, and a characteristic parameter of said final three-dimensional numerical model, representative of the quality of the representation of the observed three-dimensional scene; and,
- using stored digital information as learning data to train and retrain the calculating unit for the execution of the method of three-dimensional reconstruction calculation by learning.

2. Method according to claim 1, further comprising the acquisition, by at least one determined image sensor, preferably a passive video sensor of the CMOS type or of the CCD type, of two-dimensional digital images representing the observed three-dimensional scene.

3. Method according to claim 1 or claim 2, further comprising displaying the final three-dimensional numerical model, by a display device such as a two-dimensional scanning or LED display screen, virtual or augmented reality glasses, or a three-dimensional display screen.

4. Method according to any one of claims 1 to 3, wherein the characteristic parameter of the three-dimensional numerical models is the uncertainty associated with each of the values of said three-dimensional numerical models.

5. Method according to any one of claims 1 to 4, wherein the learning data used by the calculating unit to train and retrain the method of three-dimensional reconstruction calculation by learning comprise:
- data from databases, shared or not, comprising two-dimensional digital images and associated three-dimensional numerical models; and/or
- data comprising two-dimensional digital images and associated three-dimensional numerical models resulting from the execution of the method by another calculating unit; and/or
- data comprising two-dimensional digital images and associated three-dimensional numerical models resulting from the execution of another method by a calculating unit.

6. Method according to any one of claims 1 to 5, wherein each intermediate three-dimensional numerical model is either a depth map or a three-dimensional point cloud.

7. Method according to any one of claims 1 to 6, wherein, during one or more steps of generating intermediate three-dimensional numerical models, a second remote calculating unit cooperates with the calculating unit to generate said one or more intermediate three-dimensional numerical models.

8. Method according to any one of claims 1 to 7, wherein the received two-dimensional digital images are color digital images and wherein the final generated three-dimensional numerical model comprises textures determined based on the colors of said two-dimensional digital images.

9. Calculating unit (203), comprising hardware and software means for executing all the steps of the method according to any one of claims 1 to 8.

10. Three-dimensional imaging device comprising at least one digital image sensor (202a, 202b, 202c), a memory (205) and a calculating unit 203) according to claim 9.
